# EUROPEAN PATENT SPECIFICATION

(11) **EP 4 679 243 B1**
(45) Date of publication and mention of the grant of the patent: **04.11.2026**
(21) Application number: 25187084.6
(22) Date of filing: 02.07.2025
(51) Int. Cl.: G06F 3/04815, G06F 3/04842

(54) **METHOD FOR TARGETING VIRTUAL OBJECTS IN THREE-DIMENSIONAL SPACE, HEAD-MOUNTED DISPLAY DEVICE, AND STORAGE MEDIUM**
VERFAHREN ZUM ERFASSEN VIRTUELLER OBJEKTE IM DREIDIMENSIONALEN RAUM, KOPFMONTIERTE ANZEIGEVORRICHTUNG UND SPEICHERMEDIUM
PROCÉDÉ DE CIBLAGE D'OBJETS VIRTUELS DANS UN ESPACE TRIDIMENSIONNEL, DISPOSITIF D'AFFICHAGE MONTÉ SUR LA TÊTE ET SUPPORT D'INFORMATIONS

(30) Priority: 10.07.2024 CN 202410917060
(43) Date of publication of application: 14.01.2026
(73) Proprietor: ELABEL Technology (Beijing) Ltd., 100102 Beijing (CN)
(72) Inventor: PAN, JONG-GUANG, Beijing, 100102 (CN)
(74) Representative: Cabinet Chaillot

(56) References cited:
- EP-B1- 3 908 904
- US-A1- 2013 050 069

## Description

### TECHNICAL FIELD

The present invention relates to the technical field of virtual touch control, and more particularly to a method for targeting virtual objects in three-dimensional space, a head-mounted display device, and a storage medium.

### BACKGROUND OF THE INVENTION

Extended Reality (XR) refers to an environment where reality and virtuality are combined through computer technology and wearable devices to enable human-computer interaction. XR is a general term for various forms including Augmented Reality (AR), Virtual Reality (VR), and Mixed Reality (MR). With the popularization and development of XR in various industries, various XR smart glasses have emerged, enabling interaction between users and systems through virtual keyboards and three-dimensional touch input.

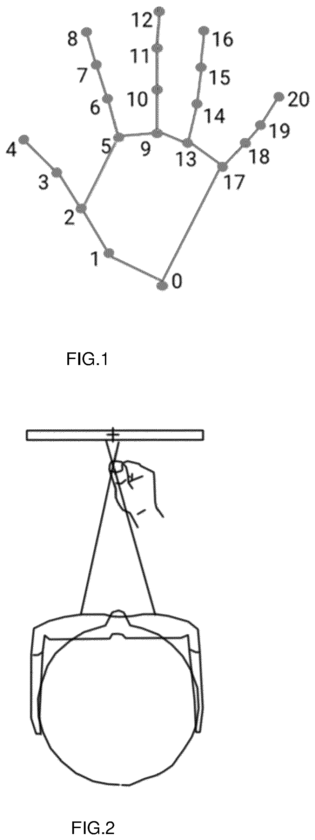

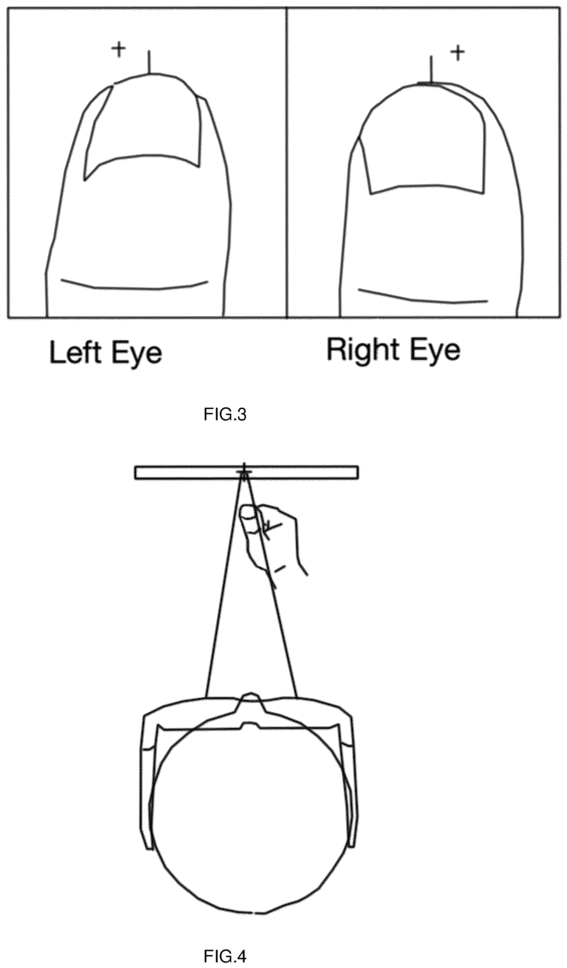

Applications of XR glasses for AR/VR/MR require targeting virtual objects in a distant space for operations. These virtual objects may include keyboards, drawing boards, application windows, or polygonal 3D objects rendered through spatial computing. Users need to target specific virtual areas (such as buttons) to perform operations (such as clicking, dragging, rotating, etc.). Physical targeting tools include peripheral handles, rings, wristbands, mobile phones, or remote controllers. Currently, there are three types of virtual targeting methods:
(1) Eyeball tracking: Gaze points of both eyeballs are tracked by eye-tracking sensors inside a pair of smart glasses, and then being used to calculate a focused virtual target area. An advantage of eyeball tracking is that it does not require adjusting a targeting direction, thus avoiding the problem of double vision caused by unclear focus. This is why some glasses companies use expensive eyeball-tracking sensors to eliminate the need to select which virtual target object corresponds to an aiming point - in other words, users only need to focus on the target with both eyes. However, a disadvantage of this method is that users must continuously stare at the target object using both eyes, which can cause eye fatigue during prolonged operation.
(2) Ray tracing: A starting point (like a light source) is set at a position on a user's body or on a position with respect to an XR smart glasses, and an object (such as a hand joint or a controller) that can be captured by a camera is used as an aiming point to form a three-dimensional ray, and this ray is extended outwardly to a virtual target area. An advantage of ray tracing is that users can clearly see the direction which their aiming point is pointing to, and whether the ray hits a virtual target object. Users can observe and adjust a targeting direction of the aiming point accordingly in order to hit the intended virtual target object. However, because the aiming point and the virtual target object are at different distances, users may experience focus confusion. When users focus on the aiming point with both eyes, the virtual target object may be split into two images (double vision), as shown in FIGs. 2 and 3. This is an exemplary double vision problem as in aiming with a gun scope - therefore, the aiming point on the gun scope can only be observed by one eye, otherwise, there will be two targets if the aiming point of the gun scope is observed by both eyes, and if focusing on one target, there will be two aiming points.
(3) Central viewpoint: This is the simplest and most primitive method, where a viewpoint is drawn at a center of each of the left and right glasses of the XR smart glasses. A surface area of the virtual target object at an orthogonal intersection of virtual lines projected from the viewpoints is a target position to be operated. An advantage of central viewpoint is that there is no parallax, as the central viewpoint is the same for both eyes. A disadvantage is that users must rely on head movement and rotation to aim at different centrally located virtual target areas with different corresponding orthogonal intersections, which places a significant burden on the head.

In the absence of eyeball-tracking sensors, if users wish to aim at a virtual object that is not at the center of their binocular vision, users can only use the method of mapping a ray from the starting point to the aiming point to guide their eyes toward the virtual target object, such that both eyes gradually focus on the virtual target object. While this approach saves the cost of eyeball-tracking sensors and prevents eye fatigue from staring at the virtual target object, said ray tracing requires users to continuously track the ray (from the starting point to the aiming point and to a position where the ray is extended from the aiming point) with their eyes, repeatedly adjusting focuses aligning with the aiming point and the virtual target object respectively. This indirectly leads to eye fatigue.

Document EP3908904B1 discloses a ray casting-based selection technique for extended reality.

Document US2013050069A1 discloses a gesture detection method based on detecting a user's hand in extended reality using a first and/or a second camera.

### BRIEF SUMMARY OF THE INVENTION

The present invention provides a method for targeting virtual objects in three-dimensional space, a head-mounted display device, and a storage medium. The present invention can target a virtual target object in a three-dimensional space without the need to use expensive eyeball-tracking sensors, without requiring users to focus back and forth at different objects for the purpose of aiming, and without requiring users to move or rotate their heads in order to aim.

The present invention provides a method for targeting virtual objects in a three-dimensional space, applicable to an XR wearable device system, comprising the following steps:
step 1: using a hand as a control body; setting a preset position calculated from one or more hand joints of the hand as an aiming point, or setting a preset position calculated from a combination of the one or more hand joints and one or more predetermined key points on a handheld object as the aiming point;
step 2: when the control body appears simultaneously in a left camera and a right camera of a pair of XR smart glasses running said XR wearable device system, calculating coordinates XL, YL of the aiming point appearing in the left camera and coordinates XR, YR of the aiming point appearing in the right camera with reference to the control body; and then calculating a virtual three-dimensional aiming point based on the coordinates XL, YL and the coordinates XR, YR by using trigonometric calculation; forming a virtual orthogonal line extending infinitely passing orthogonally through a center of the pair of XR smart glasses and the virtual three-dimensional aiming point, and a viewpoint cursor which is parallax-free is rendered at an infinite position of the virtual orthogonal line extending infinitely;
step 3: moving the viewpoint cursor by moving the control body to target a virtual target object, while the aiming point or the control body is not being visually observed through the pair of XR smart glasses when moving the viewpoint cursor, but only the viewpoint cursor is observed; if the virtual orthogonal line does not intersect with the virtual target object, the viewpoint cursor remains at the infinite position of the virtual orthogonal line as in Step 2; if the virtual orthogonal line intersects with the virtual target object, pulling the viewpoint cursor which is parallax- free back from the infinite position to an intersection point of the virtual orthogonal line and a surface of the virtual target object facing the pair of XR smart glasses, and thus rendered and displayed at this intersection point, or rendered but not displayed to illustrate a touched or intersected state with the virtual target object in a way that does not obscure the virtual target object.

Preferably, the viewpoint cursor is a graphic or icon indicating a trigger point or the intersection point of the virtual orthogonal line and the surface of the virtual target object facing the pair of XR smart glasses.

Preferably, the aiming point is set as any position calculated from a combination of the one or more hand joints and spatial positions(s) of the one or more predetermined key points on the handheld object.

Preferably, the virtual target object is an operable or non-operable object; an operable object comprises a virtual key, a virtual button, a virtual handle, and any operable control on a virtual screen.

Preferably, calculating spatial positions of the hand joints according to the following steps:
treating a connecting line passing through two central points L and R of the left camera and the right camera of the pair of XR smart glasses respectively as the X-axis; assuming that in a field of vision of the left camera, an included angle defined as TΘL is formed between the X-axis and a connecting line connecting the central point L of the left camera and a target hand joint T; similarly, assuming that in a field of vision of the right camera, an included angle defined as TΘR is formed between the X-axis and a connecting line connecting the central point R of the right camera and the target hand joint T;
assuming a length of a parallax baseline between the two central points L and R of the left camera and the right camera as d; calculate a position (X, Z) of the target hand joint T:
   if the target hand joint T is located between the two central points L and R of the left camera and the right camera:
      $Z = d / \left[TAN\left(TθL\right)-TAN\left(TθR-π/2\right)\right] , X = Z ∗ TAN \left(TθL\right)$ (1);
   if the target hand joint T is located on a left side of the central point L of the left camera:
      $Z = d / \left[TAN\left(TθR-π/2\right)-TAN\left(TθL-π/2\right)\right] , X = - Z ∗ TAN \left(TθL\right)$ (2);
   if the target hand joint T is located on a right side of the central point R of the right camera:
      $Z = d / \left[COT\left(TθL\right)-COT\left(TθR\right)\right] , X = Z / Tan \left(TθL\right)$ (3);
   a reference point for determination of a Y-axis value is defined as any point on a lowest side of video images perceived from the left camera and the right camera; a number of Y pixels counted upwards from the reference point up to the target hand joint T appearing in the left camera and the right camera is the Y-axis value of the target hand joint T; and this Y-axis value of the target hand joint T is treated as a Y-axis value of a complete spatial position (X, Y, Z) of the target hand joint T.

Preferably, the method of the present invention also comprises touch control steps: presetting a contact between an index fingertip and a thumb tip as a grasp gesture for grabbing the virtual target object which is operable; and presetting separation of the thumb tip from the index fingertip as a release gesture; when a transition from the grasp gesture to the release gesture is detected, a click operation on the virtual target object is performed; when a continuous grasp gesture is detected, a drag or rotate operation is being performed on the virtual target object; when the release gesture is detected after the drag or rotate operation is performed, the drag or rotate operation is determined as completed.

Preferably, determination of whether the grasp gesture and the release gesture are performed in the touch control steps comprises the following steps:
Setting a trigger region with width W on a finger to be touched (in an embodiment, the finger to be touched is particular the thumb tip, and the trigger fingertip P is the index fingertip. Of course, based on different practical situations, the finger to be touched and the corresponding trigger fingertip P can be set differently); a left trigger determination point WL and a right trigger determination point WR are set at positions W/2 to the left and W/2 to the right of a central point of the trigger region respectively along a direction parallel to an X-axis, in other words, the left trigger determination point WL and the right trigger determination point WR are points corresponding to left and right boundaries of the trigger region respectively; N number of video streams with parallax are acquired by the XR wearable device system of the pair of XR smart glasses, wherein N is an integer, and N≥2, track and determine whether a trigger fingertip P is located between the left trigger determination point WL and the right trigger determination point WR corresponding to the trigger region in all corresponding N number of images bearing a same time from said N number of video streams respectively, and if yes, calculate positional information of three target points which are the left trigger determination point WL, the trigger fingertip P, and the right trigger determination point WR for each of said N number of images bearing the same time; then in each of said N number of images bearing the same time, X-axis values (WRX, PX, and WLX) of the positional information of the three target points in that image are used to calculate a ratio (PX-WRX):(WLX-PX) which is a difference in value between PX and WRX to a difference in value between WLX and PX; only when all ratios calculated in all of said N number of images bearing the same time are the same, the trigger fingertip P is determined to have touched the trigger region of the finger to be touched, otherwise, it is determined that the trigger fingertip P does not touch the trigger region of the finger to be touched.

The present invention also provides another method for targeting virtual objects in a three-dimensional space, applicable to writing, drawing, or sculpting applications of an XR wearable device system; the method comprises the following steps:
step 1: using a hand as a control body; setting a preset position calculated from one or more hand joints of the hand as an aiming point, or setting a preset position calculated from a combination of the one or more hand joints and one or more key points on a handheld object as the aiming point;
step 2: when the control body appears simultaneously in a left camera and a right camera of a pair of XR smart glasses running said XR wearable device system, calculating coordinates XL, YL of the aiming point appearing in the left camera and coordinates XR, YR of the aiming point appearing in the right camera with reference to the control body; and then calculating a virtual three-dimensional aiming point based on the coordinates XL, YL and the coordinates XR, YR by using trigonometric calculation, and rendering a writing tool or sculpting tool at the virtual three-dimensional aiming point; also setting a position where the writing tool or sculpting tool is positioned as a viewpoint cursor;
step 3: moving the viewpoint cursor by moving the control body, while the aiming point or the control body is not being visually observed by a user through the pair of XR smart glasses when moving the viewpoint cursor, but only the viewpoint cursor is observed; and when the virtual writing tool is operated to draw or write on the virtual drawing board/pad, or to draw or write directly in the air, a grasp gesture of the hand means that drawing or writing is enabled once the control body is moved where paint or dots are rendered at a same parallax free position as an end of the writing tool to display strokes or handwriting; a release gesture of the hand represents stopping of the drawing or writing; when the viewpoint cursor contacts the virtual drawing board/pad, the end of the writing tool is displayed at a same parallax free position as a contact point of the viewpoint cursor on the virtual drawing board/pad; when the viewpoint cursor is a sculpting tool, a tip of the sculpting tool is an operable point; by removing unwanted pixel points one by one on an outer layer of a virtual target object, a sculpting action is performed and a sculpture is gradually resulted.

The present invention also provides a head-mounted display device, comprising at least two cameras configured to capture videos and/or images of a target area; the head-mounted display device also comprises a memory and a processor; the memory stores a computer program, which when executed by the processor, implements the method as described above for targeting virtual objects in three-dimensional space.

The present invention also provides a storage medium which is computer readable, wherein a computer program is stored in the storage medium; the computer program, when executed by a computer processor, implements the method as described above for targeting virtual objects in three-dimensional space.

Apart from saving the use of expensive eyeball-tracking sensors, the present invention also has the following beneficial effects:
1. Since the viewpoint cursor only needs to be parallax-free (sufficiently distant) and does not need to be displayed at the exact centers of the screens as in the central viewpoint technique of the prior art, when the user's eyes focus on a distant point, there is no need for repeated focus adjustments back and forth the target and the aiming point as in ray-tracing technique of the prior art or head movement/rotation to align with the intended virtual target objects as in the central viewpoint technique of the prior art. Instead, the user can simply look at a virtual target object as if eyeball-tracking sensors were being used.
2. Because the viewpoint cursor is moved via a controller, the user's eyes are decoupled from the hand-bound viewpoint cursor, and since the viewpoint cursor is not necessarily at a screen's center, the user can freely move their eyes without needing to move or rotate his/her head to target a virtual target object.
3. To avoid the problem of double vision caused by observing the aiming point by two eyes, the present invention, with reference to the control body, sets any position calculated from one or more hand joints of the hand as an aiming point, or sets any position calculated from a combination of the one or more hand joints and spatial position(s) of one or more key points on a handheld object as the aiming point, and then calculating a virtual three-dimensional aiming point and forming a virtual orthogonal line extending infinitely passing orthogonally through a center of the pair of XR smart glasses and the virtual three-dimensional aiming point, and a viewpoint cursor which is parallax-free is rendered at an infinite position of the virtual orthogonal line extending infinitely. User moves the viewpoint cursor by moving the control body to target a virtual target object, while the aiming point or the control body is not being visually observed through the pair of XR smart glasses when moving the viewpoint cursor, but only the viewpoint cursor is observed; if the virtual orthogonal line does not intersect with the virtual target object, the viewpoint cursor remains at the infinite position of the virtual orthogonal line as in step 2 according to the present invention; if the virtual orthogonal line intersects with the virtual target object, pull the viewpoint cursor which is parallax- free back from the infinite position to an intersection point of the virtual orthogonal line and a surface of the virtual target object facing the pair of XR smart glasses, and thus rendered and displayed at this intersection point, or rendered but not displayed to illustrate a touched or intersected state with the virtual target object in a way that does not obscure the virtual target object.
4. Since the viewpoint cursor has no parallax when intersecting with the virtual target object, the present invention can be implemented even on glasses not equipped with three-dimensional spatial computation (no parallax), meaning it is also applicable to single-camera glasses with two-dimensional visual computing. With video stream from only one camera, there is no need to calculate a virtual three-dimensional aiming point. An orthogonal direction orthogonal to the aiming point (X, Y) calculated from the video stream is at a same (X, Y) position, and the viewpoint cursor is rendered at the aiming point. When the viewpoint cursor on a pair of single-camera glasses target at a virtual target object, the rendering standard can be selected based on the settings of the left and right screens of the glasses. If parallax exists, the viewpoint cursor is rendered accordingly based on the parallax; if no parallax exists (i.e., both eyes see identical content, as in a pair of 2D glasses), the virtual target object also lacks parallax, so the viewpoint cursor does not need parallax either.
5. The user can aim using peripheral vision. Since the aiming point is calculated based on one or more hand joints or based on said one or more hand joints in combination with one or more key points on a handheld object, the user does not need to look directly at the viewpoint cursor to target an object. This means the vision can be decoupled from the hand-bound viewpoint cursor-for example, in gaming, the eyes can search for the next target while the hand can shoots or controls the previously selected target.

### BRIEF DESCRIPTION OF THE DRAWINGS

FIG. 1 shows the 21 recognizable hand joints and their numberings as provided by the official website of Mediapipe;
FIG. 2 is a schematic diagram of a user focusing an aiming point through a pair of XR smart glasses;
FIG. 3 is a schematic diagram showing how differently the viewpoint cursor appears in the visions of the left and the right eyes respectively when the user focuses on the aiming point;
FIG. 4 is a method for targeting virtual objects in three-dimensional space according to the present invention;
FIG. 5 is a schematic diagram of calculating a spatial position of a hand joint through the left camera of the pair of XR smart glasses;
FIG. 6 is a schematic diagram of calculating a spatial position of a hand joint through the right camera of the pair of XR smart glasses;
FIG. 7 is a schematic diagram of adding a Y-axis value to a calculated hand joint position containing X-axis value and Z-axis value so as to form a complete three-dimensional hand joint position consisting of all the X-axis value, Y-axis value, and Z-axis value;
FIG. 8 is a combined image from a left camera and a right camera showing relative positioning of a trigger fingertip and two trigger determination points when the trigger fingertip does not touch a trigger region;
FIG. 9 is a combined image from a left camera and a right camera showing relative positioning of a trigger fingertip and two trigger determination points when the trigger fingertip touches a trigger region;
FIG. 10 illustrates four separate images showing relative positioning of a trigger fingertip and two trigger determination points, where the upper two images show images from the left camera and the right camera respectively when the trigger fingertip does not touch a trigger region, and the lower two images show images from the left camera and the right camera respectively when the trigger fingertip touches a trigger region;
FIG. 11 is a functional block diagram of a head-mounted display device according to the present invention;
FIG. 12 is a schematic diagram of another implementation of the aiming point;
FIG. 13 is a schematic diagram showing a touched state of a virtual target object as viewed by a user according to an embodiment of the present invention;
FIG. 14 is a schematic diagram showing processes of an application of the present invention in a scenario where the present invention is used for writing or drawing by means of a virtual writing tool according to another embodiment of the present invention;
FIG. 15 is a schematic diagram showing processes of an application of the present invention in a scenario where the present invention is used for sculpturing or chiseling on a virtual rock by means of a virtual sculpting tool according to another embodiment of the present invention.

### DETAILED DESCRIPTION OF THE INVENTION

The following will clearly and thoroughly describe the technical solutions of the embodiments of the present application with reference to the accompanying drawings. Obviously, the described embodiments are only some but not all of the embodiments of the present application. Based on the embodiments of the present application, all other embodiments obtainable by ordinary technicians in the field of art without any inventive effect shall also fall within the protection scope of the present invention.

It should be noted that the terms "first", "second", etc. in the description and claims as well as in the drawings of the present application are used to distinguish similar objects and do not necessarily describe a specific order or sequence. It should be understood that the terms used in this way can be interchanged under appropriate circumstances, so that the embodiments of the present application described herein can be implemented in an order other than those illustrated or described herein. In addition, the terms "comprising" and "having" and any variations thereof are intended to be non-exclusive. For example, a process, method, system, product, or device that includes a series of steps or units is not necessarily limited to those clearly listed steps or units, but may include other steps or units that are not explicitly listed or are inherent to the process, method, system, product, or device.

In the embodiments of the present application, the terms "exemplary" or "for example" are used to indicate examples, exemplifications, or explanations. Any embodiment or solution described as "exemplary" or "for example" in the embodiments of the present application should not be construed as being more preferred or advantageous than other embodiments or solutions. Rather, the use of "exemplary" or "for example" is intended to present related concepts in a more specific manner.

Principles of the technical implementation of the present invention:
(1) As same as the prior art illustrated by FIG. 2, the present invention also uses a hand as a control body (a remote controller), and a hand joint or a preset position calculated from a combination of the hand joint and a predetermined key point of a handheld object is set as an aiming point. This aiming point is exemplified by the vertical line above the thumb as shown in FIG. 3. In the prior art, when the user focuses on the aiming point through a pair of XR smart glasses, a viewpoint cursor (assumed as "+" symbol in FIG. 2) formed on a virtual line passing through a center of the pair of XR smart glasses and the aiming point will have the problem of double vision: namely that, as shown in FIG 3, the left eye will see the viewpoint cursor (+) on a left side of the aiming point, while the right eye will see the viewpoint cursor (+) on a right side of the aiming point. In the other way round, if the user focuses on a virtual target object at a distance through the pair of XR smart glasses, the left eye will see the aiming point on a right side of the virtual target object, and the right eye will see the aiming point on a left side of the virtual target object. Due to parallax, in a two dimensional coordinate system consisting of XY axes of the pair of XR smart glasses, a left display of the pair of XR smart glasses will show the aiming point having an X coordinate of XL, and a right display of the pair of XR smart glasses will show the aiming point having an X coordinate of XR, while the Y coordinate of the aiming point in both the left display and the right display should be the same. According to the present invention, a virtual midpoint between a parallax difference between XL and XR is defined as XC, which is (XL+XR)/2, and a viewpoint cursor formed at an infinite position of a virtual line extending infinitely through the center of the pair of XR smart glasses and the virtual midpoint (XC) is parallax-free. To prevent the eyes from focusing on the aiming point or the control body, the hand is preset as the control body (remote controller), and a position above the thumb (e.g., 1 cm) is set as the aiming point. In a three-dimensional space consisting of XYZ axes, the different coordinates of the aiming point perceived from the left display and the right display of the pair of XR smart glasses are used for trigonometric calculation of a virtual three-dimensional aiming point according to known trigonometric calculation method. A specific example of the present invention is shown in FIG. 4, wherein a virtual orthogonal line extending infinitely passes orthogonally through the center of the pair of XR smart glasses and the virtual three-dimensional aiming point, and a parallax-free viewpoint cursor (+) is rendered at an infinite position of the virtual orthogonal line extending infinitely. At this moment, the viewpoint cursor (+) appears at a same position in the left display and the right display of the pair of XR smart glasses, meaning that the viewpoint cursor (+) is parallax-free. The viewpoint cursor is moved by moving the control body, and the user only needs to look at the viewpoint cursor. If the virtual orthogonal line does not intersect with a virtual target object, the parallax-free viewpoint cursor remains as it is. If the virtual orthogonal line intersects with a virtual target object, the parallax-free viewpoint cursor is pulled back from infinity to an intersection point of the virtual orthogonal line and a surface of the virtual target object facing the pair of XR smart glasses, and thus rendered and displayed at this intersection point, or rendered but not displayed to illustrate a touched or intersected state with the virtual target object in a way that does not obscure the virtual target object.

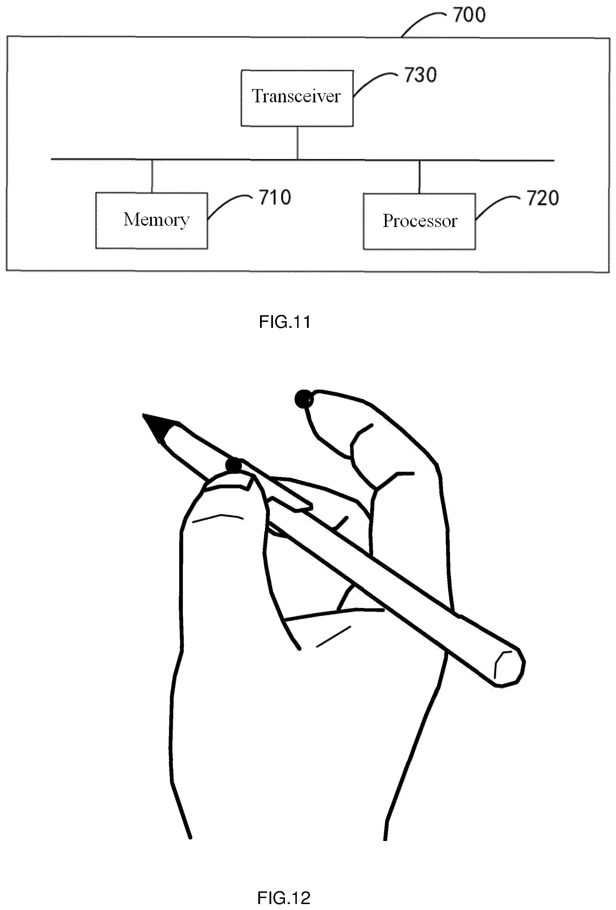

The present invention can set any position calculated based on a hand joint as the aiming point, or set a position calculated from a combination of a hand joint and a key point on a handheld object as the aiming point. At the virtual three-dimensional aiming point according to a particular embodiment as shown for example in FIG. 12, a writing tool or sculpting tool is rendered at the virtual three-dimensional aiming point, and a preset position of the writing tool or sculpting tool is preset as the viewpoint cursor (in FIG. 12, a preset position may be the pen tip), , and the viewpoint cursor is moved by the hand holding the pen.

In addition to the hand being the control body, the present invention can also use any object as the control body. For example, a disabled individual can use a foot as the control body, and a contact of both feet can be set as a trigger action. Therefore, anything that can be calculated and located through a coordinate system of the pair of XR smart glasses can be set as the control body.

(2) The virtual target object can be an operable or non-operable object. An operable object includes a virtual key, a virtual button, a virtual handle, and any operable control on a virtual screen. A user interface (UI) seen through the pair of XR smart glasses is an operable virtual target object. When the virtual orthogonal line intersects with a virtual target object, the parallax-free viewpoint cursor is pulled back from infinity to an intersection point of the virtual orthogonal line and a surface of the virtual target object facing the pair of XR smart glasses, and thus rendered at this intersection point on which the viewpoint cursor may actually disappear, and the virtual target object can be shown as being in an operable state (e.g., being protruded or brightened).

### (3) Methods for implementing touch control:

Contact between an index fingertip and a thumb tip is preset as a grasp gesture for grabbing an operable virtual target object, and separation of the thumb tip from the index fingertip is preset as a release gesture. When a transition from the grasp gesture to the release gesture is detected, a click operation of the operable virtual target object is achieved. When a continuous grasp gesture is detected, a drag or rotate operation is performed on the operable virtual target object. The release gesture performed after the drag or rotate operation signifies completion of the drag or rotate operation. Of course, the present invention is not limited to using the contact between the index fingertip and thumb tip as the grasp gesture. Other joints or actions can be preset as the grasp gesture. For example, contact and release between the middle finger and the thumb can be set as conventional right-click action of a conventional mouse, and sliding of the index fingertip between two distal joints of the thumb can be set as conventional scrolling action of a scroll wheel of a conventional mouse. Specific settings of gestures are not the inventive technical features of the present invention, and can be customized as needed.

In applications such as writing, drawing, or sculpting, the viewpoint cursor can be rendered as a pen or carving knife, with a tip of the pen or a tip of the knife being a trigger point of the viewpoint cursor. The present invention only provides examples. Developers of the relevant applications can design their preferred graphics and define a desired position on the graphic as the trigger point. For example, the trigger point of a cross image is an intersection point of the two lines of the cross, a trigger point of an arrow is the arrowhead, and the trigger point of a pen is the pen tip.

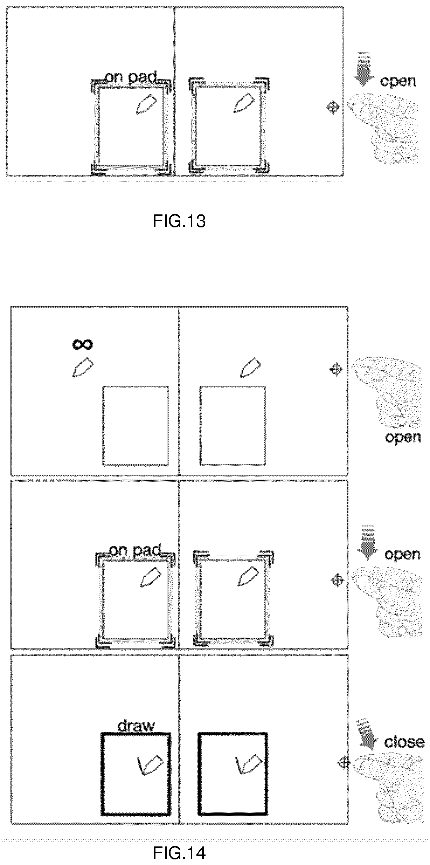

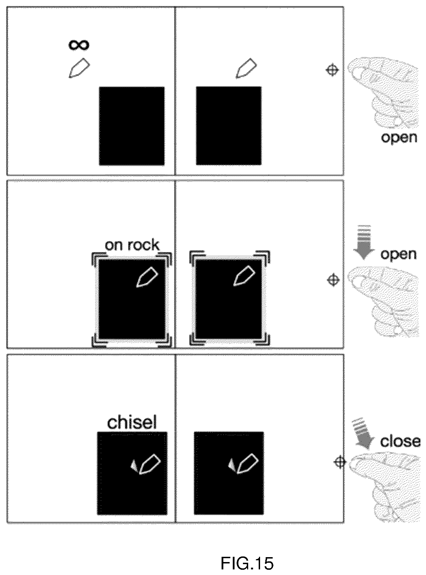

In applications such as writing, drawing, or sculpting, there is no virtual object to target. Users target a specific position on a plane or in a three-dimensional space with the viewpoint cursor. When clicking or dragging, strokes or lines are rendered with paint or dots, or sculpting actions can be achieved, thereby achieving writing, drawing, or sculpting functions. Please refer to the examples illustrated in FIGs. 14 and 15.

(4) Recognition model used to obtain hand joint positional information: An open source software currently available in the market for a pre-trained human hand joint detection model that can acquire two dimensional positions of human hand joints can be used. The present invention uses Mediapipe as an illustrative example. As an open source project of Google, Mediapipe is a tool library for machine learning which mainly pertains to visual algorithms, and integrates a large sum of models relating to face detection, face key points, gesture recognition, head segmentation, and posture recognition. As shown in FIG. 1, positional information of 21 joint points (also referred to as key points) of a human hand in a video bearing a time sequence can be outputted. Generally, a human hand joint detection model outputs joint positional information in form of (X, Y) pixels being coordinates of an X-axis and a Y-axis of the video. The present invention can also use a self-trained human hand joint detection model. The present invention also comprises recognition learning by using an artificial intelligence chip such as a graphics processing unit (GPU) or a neural network processing unit (NPU) through label convolution KNN or RNN or Transformer model or any other learning models with Reinforced or any enhanced pre-training methods.

### (5) Calculating spatial positions of hand joints:

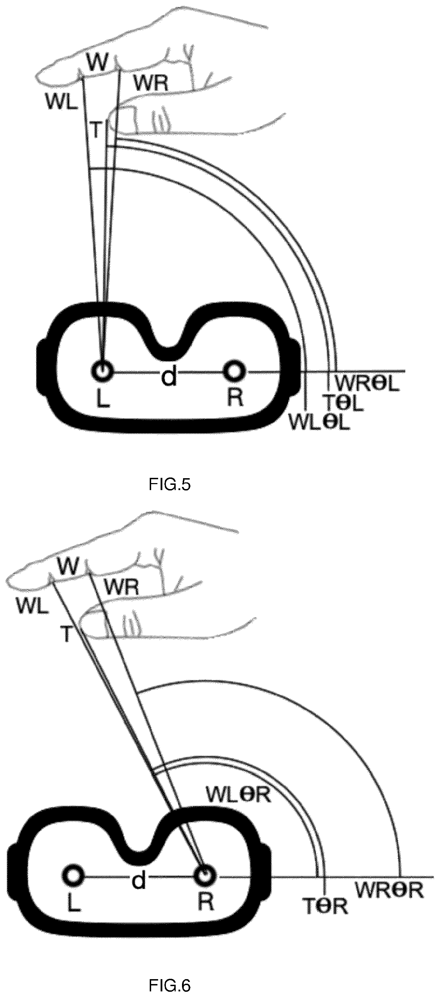

As shown according to an embodiment of FIG. 5, treating a connecting line passing through two central points L and R of a left camera and a right camera of a pair of XR smart glasses respectively as an X-axis; assuming that in a field of vision of the left camera, an included angle defined as TΘL is formed between the X-axis and a connecting line connecting the central point L of the left camera and a target hand joint T; similarly in FIG. 6, assuming that in a field of vision of the right camera, an included angle defined as TΘR is formed between the X-axis and a connecting line connecting the central point R of the right camera and the target hand joint T;
assuming a length of a parallax baseline between the two central points L and R of the left camera and the right camera as d; calculate a position (X, Z) of the target hand joint T:
If the target hand joint T is located between the two central points L and R of the left camera and the right camera:
   $Z = d / \left[TAN\left(TθL\right)-TAN\left(TθR-π/2\right)\right] , X = Z ∗ TAN \left(TθL\right)$ (1);
If the target hand joint T is located on a left side of the central point L of the left camera:
   $Z = d / \left[TAN\left(TθR-π/2\right)-TAN\left(TθL-π/2\right)\right] , X = - Z ∗ TAN \left(TθL\right)$ (2);
If the target hand joint T is located on a right side of the central point R of the right camera:
   $Z = d / \left[COT\left(TθL\right)-COT\left(TθR\right)\right] , X = Z / Tan \left(TθL\right)$ (3).

The above examples use TAN and COT for calculation. Of course, the present invention can also use any other trigonometric calculation methods or obtain the three-dimensional coordinates (X, Y, Z) of the target hand joint visible through the pair of XR smart glasses by any depth sensor or depth model.

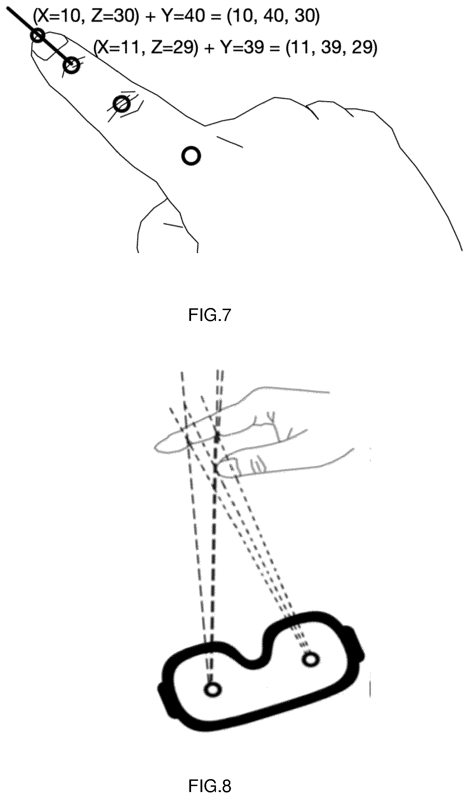

Since the X-axis is defined as a straight connecting line passing through two central points L and R of both the left and right cameras of the pair of XR smart glasses, the parallax exists only on the X-axis. Therefore, no parallax exists on the Y-axis. In other words, the Y-axis value perceived in the left and right cameras must be the same. A reference point for determination of the Y-axis value can be defined as a lowest point or other definable positions of the video images perceived from the left and right cameras. Therefore, a number of Y pixels (or any converted distance unit therefor) counted upwards from the reference point is the Y-axis value. Adding this Y-axis value to the targeted hand joint position (X, Z) forms a complete targeted hand joint position (X, Y, Z), as shown in FIG. 7.

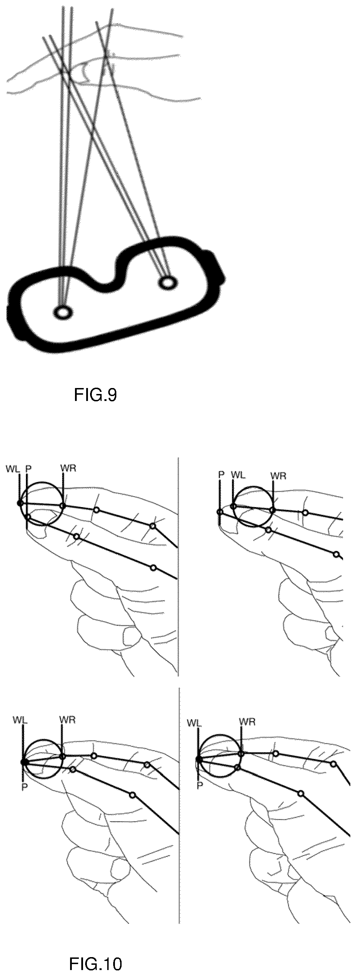

(6) Determination of whether grasp and release gestures are performed:
If a contact between an index fingertip and a thumb tip is preset as the grasp gesture, a trigger region with width W is set on the index fingertip, as shown in FIG. 10. Of course, according to some other embodiments of touch of two fingers, as shown in FIGs. 5, 6, 8, 9, a touch can also be achieved by through contact between a thumb tip and a middle phalange of the index finger, and the trigger region with width W is set on the middle phalange of the index finger. Nonetheless, it is understood that the same principle as described below with reference to FIG. 10 also applies to the embodiments as shown in FIGs. 5, 6, 8, and 9. A left trigger determination point WL and a right trigger determination point WR are set at positions W/2 to the left and W/2 to the right of a central point of the trigger region respectively along a direction parallel to an X-axis, in other words, the left trigger determination point WL and the right trigger determination point WR are points corresponding to left and right boundaries of the trigger region respectively; N number of video streams with parallax from at least two cameras of the pair of XR smart glasses are acquired by an XR system of the pair of XR smart glasses, wherein N is an integer, and N≥2, track and determine whether the trigger fingertip P (i.e. the thumb tip) is located between the left trigger determination point WL and the right trigger determination point WR corresponding to the trigger region in all corresponding N number of images bearing a same time from said N number of video streams respectively, and if yes, calculate positional information of three target points which are the left trigger determination point WL, the trigger fingertip P, and the right trigger determination point WR for each of said N number of images bearing the same time; then in each of said N number of images bearing the same time, X-axis values (WRX, PX, and WLX) of the positional information of the three target points in that image are used to calculate a ratio (PX-WRX):(WLX-PX) which is a difference in value between PX and WRX to a difference in value between WLX and PX; as shown in FIG. 8 to 10, only when all ratios calculated in all of said N number of images bearing the same time are the same (and within a threshold of an acceptable range of deviation), the trigger fingertip P is determined to have touched the trigger region of the index fingertip. Otherwise, it is determined that the trigger fingertip P does not touch the trigger region of the index finger tip.

### Embodiment 1:

A first embodiment of the present invention relates to a method for targeting virtual objects in a three-dimensional space, applicable to an XR wearable device system, comprising the following steps:
Step 1: Using a hand as a control body (remote controller); setting a preset position calculated from one or more hand joints of the hand as an aiming point, or setting a preset position calculated from a combination of the one or more hand joints and one or more key points on a handheld object as the aiming point;
Step 2: When the control body appears simultaneously in a left camera and a right camera of the XR wearable device system, calculating coordinates XL, YL of the aiming point appearing in the left camera and coordinates XR, YR of the aiming point appearing in the right camera with reference to the control body; and then calculating a virtual three-dimensional aiming point based on the coordinates XL, YL and the coordinates XR, YR by using trigonometric calculation; forming a virtual orthogonal line extending infinitely passing orthogonally through a center of a pair of XR smart glasses and the virtual three-dimensional aiming point, and a viewpoint cursor which is parallax-free is rendered at an infinite position of the virtual orthogonal line extending infinitely.

With reference to Step 3 which will be described below, the viewpoint cursor can be a light dot, a graphic or an icon indicating a trigger point or an intersection position with a virtual target object. It can be a cross icon (+), or any customized graphic or icon such as an arrow, a writing pen, a paint brush, or carving knife.

Step 3: moving the viewpoint cursor by moving the control body to target a virtual target object, while the aiming point or the control body is not being visually observed by a user through the pair of XR smart glasses when moving the viewpoint cursor, but only the viewpoint cursor will be observed; if the virtual orthogonal line does not intersect with the virtual target object, the viewpoint cursor remains at the infinite position of the virtual orthogonal line as in Step 2; if the virtual orthogonal line intersects with the virtual target object, pulling the viewpoint cursor which is parallax- free back from the infinite position to an intersection point of the virtual orthogonal line and a surface of the virtual target object facing the pair of XR smart glasses, and thus rendered and displayed at this intersection point, or rendered but not displayed to illustrate a touched or intersected state with the virtual target object in a way that does not obscure the virtual target object. As shown in FIGs. 13 and 14, from the viewpoint of a user, when the viewpoint cursor touches a virtual drawing board/pad, the virtual drawing board/pad changes in color and slightly vibrate to indicate that it is being touched.

The present invention presets the hand as the control body. A preset position calculated from one or more hand joints of the hand is set as the aiming point, or a position calculated from a combination of the one or more hand joints of the hand and one or more key points on a handheld object is set as the aiming point. When the control body appears simultaneously in the left and right cameras of the pair of XR smart glasses, coordinates XL, YL of the aiming point appearing in the left camera and coordinates XR, YR of the aiming point appearing in the right camera are calculated with reference to the control body; and then the virtual three-dimensional aiming point based on the coordinates XL, YL and the coordinates XR, YR is calculated by using trigonometric calculation (the virtual three-dimensional aiming point is using positioned near the hand, but not at an infinite position); the virtual orthogonal line extending infinitely passing orthogonally through the center of the pair of XR smart glasses and the virtual three-dimensional aiming point is formed, and a viewpoint cursor which is parallax-free is rendered at an infinite position of the virtual orthogonal line extending infinitely. The above technical solutions imply that the virtual target object, when intersected by the virtual orthogonal line, must be located between the virtual three-dimensional aiming point and the viewpoint cursor at the infinite position of the virtual orthogonal line extending orthogonally with respect to the pair of XR smart glasses. According to the present invention, the virtual three-dimensional aiming point and the viewpoint cursor are both located on the virtual orthogonal line such that when viewing through the XR wearable device system, the virtual three-dimensional aiming point and the viewpoint cursor are at a same overlapped position, and the actual aiming point is not on the virtual orthogonal line, so it is the reason why in step 2, only the viewpoint cursor is rendered, but not the virtual three-dimensional aiming point and the actual aiming point. The virtual orthogonal line is orthogonal to the center of the pair of XR smart glasses but not being an actual light ray from a light source passing through the virtual three dimensional aiming point. As the virtual orthogonal line does not pass through the actual aiming point, user does not need to observe the aiming point, instead, only the viewpoint cursor can be observed. In this way, the problem of double vision of ray tracing described in the background can be solved. Accordingly, the present invention only requires observing the viewpoint cursor. When the virtual orthogonal line intersects with a virtual target object, the viewpoint cursor is pulled back from infinity to an intersection point of the virtual orthogonal line and a surface of the virtual target object facing the pair of XR smart glasses, and thus rendered and displayed at this intersection point, or rendered but not displayed to illustrate a touched or intersected state with the virtual target object in a way that does not obscure the virtual target object. Hence, the viewpoint cursor is rendered on the intersecting point. If there is no intersection with the virtual target object, the viewpoint cursor is rendered and displayed/not displayed at said infinite position of the virtual orthogonal line.

Step 4: Touch control: presetting a contact between an index fingertip and a thumb tip as a grasp gesture for grabbing the virtual target object which is operable; and presetting separation of the thumb tip from the index fingertip as a release gesture; when a transition from the grasp gesture to the release gesture is detected, a click operation on the virtual target object is performed; when a continuous grasp gesture is detected, a drag or rotate operation is performed on the virtual target object; when the release gesture is detected after the drag or rotate operation is performed, the drag or rotate operation is determined as completed.

Calculating spatial positions of the hand joints according to the following steps:
treating a connecting line passing through two central points L and R of a left camera and a right camera of a pair of XR smart glasses respectively as an X-axis; assuming that in a field of vision of the left camera, an included angle defined as TΘL is formed between the X-axis and a connecting line connecting the central point L of the left camera and a target hand joint T; similarly, assuming that in a field of vision of the right camera, an included angle defined as TΘR is formed between the X-axis and a connecting line connecting the central point R of the right camera and the target hand joint T;
assuming a length of a parallax baseline between the two central points L and R of the left camera and the right camera as d; calculate a position (X, Z) of the target hand joint T:
   If the target hand joint T is located between the two central points L and R of the left camera and the right camera:
      $Z = d / \left[TAN\left(TθL\right)-TAN\left(TθR-π/2\right)\right] , X = Z ∗ TAN \left(TθL\right)$ (1);
   If the target hand joint T is located on a left side of the central point L of the left camera:
      $Z = d / \left[TAN\left(TθR-π/2\right)-TAN\left(TθL-π/2\right)\right] , X = - Z ∗ TAN \left(TθL\right)$ (2);
   If the target hand joint T is located on a right side of the central point R of the right camera:
      $Z = d / \left[COT\left(TθL\right)-COT\left(TθR\right)\right] , X = Z / Tan \left(TθL\right)$ (3);

A reference point for determination of a Y-axis value is defined as any point on a lowest side of video images perceived from the left and right cameras. A number of Y pixels counted upwards from the reference point up to the target hand joint T appearing in the left and right cameras is the Y-axis value of the target hand joint T. This Y-axis value of the target hand joint T is treated as a Y-axis value of a complete spatial position (X, Y, Z) of the target hand joint T.

### Determination of whether grasp and release gestures are performed:

Setting a trigger region with width W on a finger to be touched; a left trigger determination point WL and a right trigger determination point WR are set at positions W/2 to the left and W/2 to the right of a central point of the trigger region respectively along a direction parallel to an X-axis, in other words, the left trigger determination point WL and the right trigger determination point WR are points corresponding to left and right boundaries of the trigger region respectively; N number of video streams with parallax from at least two cameras of the pair of XR smart glasses are acquired by an XR system of the pair of XR smart glasses, wherein N is an integer, and N≥2, track and determine whether a trigger fingertip P is located between the left trigger determination point WL and the right trigger determination point WR corresponding to the trigger region in all corresponding N number of images bearing a same time from said N number of video streams respectively, and if yes, calculate positional information of three target points which are the left trigger determination point WL, the trigger fingertip P, and the right trigger determination point WR for each of said N number of images bearing the same time; then in each of said N number of images bearing the same time, X-axis values (WRX, PX, and WLX) of the positional information of the three target points in that image are used to calculate a ratio (PX-WRX):(WLX-PX) which is a difference in value between PX and WRX to a difference in value between WLX and PX; only when all ratios calculated in all of said N number of images bearing the same time are the same, the trigger fingertip P is determined to have touched the trigger region of the finger to be touched. Otherwise, it is determined that the trigger fingertip P does not touch the trigger region of the finger to be touched.

A person skilled in the art should further realize that, the units and algorithm steps in the examples described in the disclosed embodiments of the present invention can be implemented by electronic hardware, computer software, or a combination of both. To clearly illustrate the interchangeability of hardware and software, the components and steps of each example have been generally described in terms of their functions in the foregoing description. Whether these functions are implemented by hardware or software depends on the specific applications and design constraints. A person skilled in the art can use different methods to implement the described functions for each specific application, but such implementation should not be considered beyond the scope of the present invention.

Specifically, the method steps of the embodiments of methods of the present application can be implemented by hardware integrated logic circuits in a processor and/or software instructions. The method steps disclosed in the embodiments of the present application can be directly embodied as being executed and completed by a hardware decoding processor, or executed and completed by a combination of hardware and software modules in a decoding processor. Optionally, the software module can be located in well-known storage medium in this field of art, such as random access memory, flash memory, read-only memory, programmable read-only memory, electrically erasable programmable memory, or registers. The storage medium is located in a memory, and the processor reads the information in the memory and completes the method steps of the embodiments with the combined use of its hardware.

### Embodiment 2:

The second embodiment of the present invention provides a method for targeting virtual objects in a three-dimensional space, applicable to writing, drawing, or sculpting applications of an XR wearable device system. The method includes the following steps:
Step 1: Using a hand as a control body; setting a preset position calculated from one or more hand joints of the hand as an aiming point, or setting a preset position calculated from a combination of the one or more hand joints and one or more key points on a handheld object as the aiming point;
Step 2: When the control body appears simultaneously in a left camera and a right camera of the XR wearable device system, calculating coordinates XL, YL of the aiming point appearing in the left camera and coordinates XR, YR of the aiming point appearing in the right camera with reference to the control body; and then calculating a virtual three-dimensional aiming point based on the coordinates XL, YL and the coordinates XR, YR by using trigonometric calculation;, and rendering a writing tool or sculpting tool at the virtual three-dimensional aiming point; also setting a position of the writing tool or sculpting tool (e.g. a pen tip or knife tip) as a viewpoint cursor; as shown in FIGs. 14 and 15, when the writing tool or the sculpting tool is positioned outside of a virtual drawing board/pad or a virtual rock, the viewpoint cursor is rendered at an infinite position which is parallax-free.
Step 3: moving the viewpoint cursor by moving the control body as shown in FIG. 14 where a virtual drawing board/pad changes in color and slightly vibrate to indicate a touched state when a pen tip of the writing tool first touches the virtual drawing board/pad, while the aiming point or the control body is not being visually observed by a user through the pair of XR smart glasses when moving the viewpoint cursor, but only the viewpoint cursor is observed; and when the virtual writing tool as shown in FIG. 14 is operated to draw or write on the virtual drawing board/pad, or to draw or write directly in the air, a grasp gesture of the hand means that drawing or writing is enabled once the control body is moved where paint or dots are rendered at a same parallax free position as an end of the writing tool to display strokes or handwriting; a release gesture of the hand represents stopping of the drawing or writing; as shown in FIG. 14, when the viewpoint cursor contacts the virtual drawing board/pad, the end of the writing tool is displayed at a same parallax free position as a contact point of the viewpoint cursor on the virtual drawing board/pad; when the viewpoint cursor is a sculpting tool, a tip of the sculpting tool is an operable point; as shown by FIG. 15, by removing unwanted pixel points one by one on an outer layer of a virtual target object (e.g. a virtual rock), a sculpting action is performed and a sculpture is gradually resulted. As shown in FIG. 15, the virtual rock is chiseled to form a triangular void, and the triangular void is the area where the pixel points are removed by the sculpting tool, accordingly, the scenario of real sculpturing by using a sculpting tool on a rock is simulated.

Alternatively, a face of a virtual or digital person can be molded like molding clay into different forms by using the above method steps. This process of molding clay is similar to sculpting. The difference is that sculpting removes unwanted pixel points on a surface of the virtual target object through the viewpoint cursor, while molding clay moves pixel points on the surface of the virtual target object to gradually mold the face of the virtual or digital person into a desired shape.

### Embodiment 3:

The third embodiment of the present invention provides a head-mounted display device, as shown in FIG. 11. The head-mounted display device 700 comprises: a memory 710, and a processor 720; wherein the memory 710 is configured to store computer programs and transmit codes of the computer programs to the processor 720. In other words, the processor 720 can call and run the computer programs stored in the memory 710 to implement the methods of the embodiments of the present application. For example, the processor 720 can execute the method described in the Embodiment 1 according to instructions of a corresponding computer program.

In some embodiments of the present application, the processor 720 comprises, but not limited to:
A general-purpose processor, a digital signal processor (DSP), an application-specific integrated circuit (ASIC), a field-programmable gate array (FPGA) or other programmable logic devices, discrete gates or transistor logic devices, or discrete hardware components.

In some embodiments of the present application, the memory 710 comprises but not limited to: volatile memory and/or non-volatile memory. The non-volatile memory may be read-only memory (ROM), programmable read-only memory (PROM), erasable programmable read-only memory (EPROM), electrically erasable programmable read-only memory (EEPROM), or flash memory. The volatile memory may be random access memory (RAM), which serves as external cache memory. By way of non-limiting examples, many forms of RAM are available, such as static random access memory (SRAM), dynamic random access memory (DRAM), synchronous dynamic random access memory (SDRAM), double data rate synchronous dynamic random access memory (DDR SDRAM), enhanced synchronous dynamic random access memory (ESDRAM), synch link dynamic random access memory (SLDRAM), and direct Rambus RAM (DRRAM).

In some embodiments of the present application, a computer program may be divided into one or more modules, which are stored in the memory 710 and executed by the processor 720 to complete the method described in the first embodiment of the present invention. The one or more modules may be a series of computer program instruction segments capable of performing specific functions; said series of computer program instruction segments are used to describe an execution process of the computer program in the head-mounted display device 700.

As shown in Figure 11, the head-mounted display device 700 may further comprise: a transceiver 730, which may be connected to the processor 720 or the memory 710. The processor 720 may control the transceiver 730 to communicate with other devices, specifically to send information or data to the other devices or receive information or data sent by the other devices. The transceiver 730 may be at least two cameras for capturing video and/or images of a target area.

It should be understood that the various components in the head-mounted display device 700 are connected through a bus system. In addition to a data bus, the bus system also comprises a power bus, a control bus, and a status signal bus.

### Embodiment 4:

The fourth embodiment of the present invention provides a computer storage medium on which a computer program is stored. When the computer program is executed by a computer, the computer is enabled to execute the method described in the first embodiment.

The specific implementations described above further describe the objectives, technical solutions, and beneficial effects of the present invention in detail. It should be understood that the above description contains only specific implementations of the present invention and are not intended to limit the protection scope of the present invention. The invention is defined by the appended claims.

## Claims

1. A method for targeting virtual objects in a three-dimensional space, applicable to an XR wearable device system, comprising the following steps:
step 1: using a hand as a control body; setting a preset position calculated from one or more hand joints of the hand as an aiming point, or setting a preset position calculated from a combination of the one or more hand joints and one or more predetermined key points on a handheld object as the aiming point;
step 2: when the control body appears simultaneously in a left camera and a right camera of a pair of XR smart glasses running said XR wearable device system, calculating coordinates XL, YL of the aiming point appearing in the left camera and coordinates XR, YR of the aiming point appearing in the right camera with reference to the control body; and then calculating a virtual three-dimensional aiming point based on the coordinates XL, YL and the coordinates XR, YR by using trigonometric calculation, wherein the virtual three-dimensional aiming point has a same position appearing in the left camera and the right camera of the pair of XR smart glasses, such that the virtual three-dimensional aiming point is parallax-free; forming a virtual orthogonal line extending infinitely passing orthogonally through a center of the pair of XR smart glasses and the virtual three-dimensional aiming point, and a viewpoint cursor which is parallax-free is rendered at an infinite position of the virtual orthogonal line extending infinitely; the virtual three-dimensional aiming point and the viewpoint cursor are both located on the virtual orthogonal line such that when viewing through the XR wearable device system, the virtual three-dimensional aiming point and the viewpoint cursor are at a same overlapped position, and the aiming point is not on the virtual orthogonal line, and so only the viewpoint cursor but not the aiming point or the virtual three-dimensional aiming point is rendered; the virtual orthogonal line is a virtual line where no light ray is present or rendered from the center of the pair XR smart glasses to the virtual three-dimensional aiming point;
step 3: moving the viewpoint cursor by moving the control body to target a virtual target object, while the aiming point or the control body is not being visually observed through the pair of XR smart glasses when moving the viewpoint cursor, but only the viewpoint cursor is observed; if the virtual orthogonal line does not intersect with the virtual target object, the viewpoint cursor remains at the infinite position of the virtual orthogonal line as in Step 2; if the virtual orthogonal line intersects with the virtual target object, pulling the viewpoint cursor which is parallax- free back from the infinite position to an intersection point of the virtual orthogonal line and a surface of the virtual target object facing the pair of XR smart glasses, and thus rendered and displayed at this intersection point, or rendered but not displayed to illustrate a touched or intersected state with the virtual target object in a way that does not obscure the virtual target object.

2. The method of claim 1, wherein the viewpoint cursor is a graphic or icon indicating a trigger point or the intersection point of the virtual orthogonal line and the surface of the virtual target object facing the pair of XR smart glasses.

3. The method of claim 1, wherein the aiming point is set as any position calculated from a combination of the one or more hand joints and spatial positions(s) of the one or more predetermined key points on the handheld object.

4. The method of claim 1, also comprising touch control steps: presetting a contact between an index fingertip and a thumb tip as a grasp gesture for grabbing the virtual target object which is operable; and presetting separation of the thumb tip from the index fingertip as a release gesture; when a transition from the grasp gesture to the release gesture is detected, a click operation on the virtual target object is performed; when a continuous grasp gesture is detected, a drag or rotate operation is being performed on the virtual target object; when the release gesture is detected after the drag or rotate operation is performed, the drag or rotate operation is determined as completed.

5. The method of claim 4, wherein determination of whether the grasp gesture and the release gesture are performed in the touch control steps comprises the following steps:
setting a trigger region with width W on a finger to be touched; a left trigger determination point WL and a right trigger determination point WR are set at positions W/2 to the left and W/2 to the right of a central point of the trigger region respectively along a direction parallel to an X-axis, in other words, the left trigger determination point WL and the right trigger determination point WR are points corresponding to left and right boundaries of the trigger region respectively; N number of video streams with parallax are acquired by the XR wearable device system of the pair of XR smart glasses, wherein N is an integer, and N≥2, track and determine whether a trigger fingertip P is located between the left trigger determination point WL and the right trigger determination point WR corresponding to the trigger region in all corresponding N number of images bearing a same time from said N number of video streams respectively, and if yes, calculate positional information of three target points which are the left trigger determination point WL, the trigger fingertip P, and the right trigger determination point WR for each of said N number of images bearing the same time; then in each of said N number of images bearing the same time, X-axis values (WRX, PX, and WLX) of the positional information of the three target points in that image are used to calculate a ratio (PX-WRX):(WLX-PX) which is a difference in value between PX and WRX to a difference in value between WLX and PX; only when all ratios calculated in all of said N number of images bearing the same time are the same, the trigger fingertip P is determined to have touched the trigger region of the finger to be touched, otherwise, it is determined that the trigger fingertip P does not touch the trigger region of the finger to be touched.

6. The method of claim 5, wherein calculating spatial positions of the hand joints according to the following steps:
treating a connecting line passing through two central points L and R of the left camera and the right camera of the pair of XR smart glasses respectively as the X-axis; assuming that in a field of vision of the left camera, an included angle defined as TΘL is formed between the X-axis and a connecting line connecting the central point L of the left camera and a target hand joint T; similarly, assuming that in a field of vision of the right camera, an included angle defined as TΘR is formed between the X-axis and a connecting line connecting the central point R of the right camera and the target hand joint T;
assuming a length of a parallax baseline between the two central points L and R of the left camera and the right camera as d; calculate a position (X, Z) of the target hand joint T:
if the target hand joint T is located between the two central points L and R of the left camera and the right camera: $Z = d / \left[TAN\left(TθL\right)-TAN\left(TθR-π/2\right)\right] , X = Z ∗ TAN \left(TθL\right)$ (1);
if the target hand joint T is located on a left side of the central point L of the left camera: $Z = d / \left[TAN\left(TθR-π/2\right)-TAN\left(TθL-π/2\right)\right] , X = - Z ∗ TAN \left(TθL\right)$ (2);
if the target hand joint T is located on a right side of the central point R of the right camera: $Z = d / \left[COT\left(TθL\right)-COT\left(TθR\right)\right] , X = Z / Tan \left(TθL\right)$ (3);
a reference point for determination of a Y-axis value is defined as any point on a lowest side of video images perceived from the left camera and the right camera; a number of Y pixels counted upwards from the reference point up to the target hand joint T appearing in the left camera and the right camera is the Y-axis value of the target hand joint T; and this Y-axis value of the target hand joint T is treated as a Y-axis value of a complete spatial position (X, Y, Z) of the target hand joint T.

7. A method for targeting virtual objects in a three-dimensional space, applicable to writing, drawing, or sculpting applications of an XR wearable device system; the method comprises the following steps:
step 1: using a hand as a control body; setting a preset position calculated from one or more hand joints of the hand as an aiming point, or setting a preset position calculated from a combination of the one or more hand joints and one or more key points on a handheld object as the aiming point;
step 2: when the control body appears simultaneously in a left camera and a right camera of a pair of XR smart glasses running said XR wearable device system, calculating coordinates XL, YL of the aiming point appearing in the left camera and coordinates XR, YR of the aiming point appearing in the right camera with reference to the control body; and then calculating a virtual three-dimensional aiming point based on the coordinates XL, YL and the coordinates XR, YR by using trigonometric calculation wherein the virtual three-dimensional aiming point has a same position appearing in the left camera and the right camera of the pair of XR smart glasses, such that the virtual three-dimensional aiming point is parallax-free; and rendering a writing tool or sculpting tool at the virtual three-dimensional aiming point; also setting a position where the writing tool or sculpting tool is positioned as a viewpoint cursor; the aiming point is not on the virtual orthogonal line so only the viewpoint cursor is rendered but not the aiming point or the virtual three-dimensional aiming point; no light ray is present from the center of the pair of XR smart glasses to the virtual three-dimensional aiming point;
step 3: moving the viewpoint cursor by moving the control body to draw or write on a virtual drawing board/pad, or to drawing or write directly in the air, while the aiming point or the control body is not being visually observed by a user through the pair of XR smart glasses when moving the viewpoint cursor, but only the viewpoint cursor is observed; wherein a grasp gesture of the hand means that drawing or writing is enabled once the control body is moved where paint or dots are rendered at a same parallax free position as an end of the writing tool to display strokes or handwriting; a release gesture of the hand represents stopping of the drawing or writing; when the viewpoint cursor contacts the virtual drawing board/pad, the end of the writing tool is displayed at a same parallax free position as a contact point of the viewpoint cursor on the virtual drawing board/pad; when the viewpoint cursor is a sculpting tool, a tip of the sculpting tool is an operable point; by removing unwanted pixel points one by one on an outer layer of a virtual target object, a sculpting action is performed and a sculpture is gradually resulted.

8. A head-mounted display device (700), comprising at least two cameras configured to capture videos and/or images of a target area; the head-mounted display device (700) also comprises a memory (710) and a processor (720); the memory (710) stores a computer program, which when executed by the processor (720), implements the method for targeting virtual objects in three-dimensional space of any one of claims 1-7.

9. A storage medium which is computer readable, wherein a computer program is stored in the storage medium; the computer program, when executed by a processor (720), implements the method for targeting virtual objects in three-dimensional space of any one of claims 1-7.

## Patentansprüche

1. - Verfahren zum Anvisieren virtueller Objekte in einem dreidimensionalen Raum, anwendbar auf ein tragbares XR-Vorrichtungssystem, umfassend die folgenden Schritte:
Schritt 1: Verwenden einer Hand als Steuerkörper; Festlegen einer voreingestellten Position, die anhand eines oder mehrerer Handgelenke der Hand berechnet wird, als Zielpunkt, oder Festlegen einer voreingestellten Position, die anhand einer Kombination des einen oder der mehreren Handgelenke und eines oder mehrerer vorbestimmter Schlüsselpunkte an einem handgehaltenen Objekt berechnet wird, als Zielpunkt;
Schritt 2: wenn der Steuerkörper gleichzeitig in einer linken Kamera und einer rechten Kamera einer smarten XR-Brille erscheint, die das tragbare XR-Vorrichtungssystem ausführt, Berechnen von Koordinaten XL, YL des Zielpunkts, der in der linken Kamera erscheint, und von Koordinaten XR, YR des Zielpunkts, der in der rechten Kamera erscheint, in Bezug auf den Steuerkörper; und dann Berechnen eines virtuellen dreidimensionalen Zielpunkts basierend auf den Koordinaten XL, YL und den Koordinaten XR, YR unter Verwendung von trigonometrischer Berechnung, wobei der virtuelle dreidimensionale Zielpunkt an derselben Position in der linken Kamera und der rechten Kamera der smarten XR-Brille erscheint, sodass der virtuelle dreidimensionale Zielpunkt parallaxenfrei ist; Bilden einer virtuellen orthogonalen Linie, die unendlich weit reicht und orthogonal durch ein Zentrum der smarten XR-Brille und den virtuellen dreidimensionalen Zielpunkt verläuft, und ein parallaxenfreier Sichtpunkt-Cursor wird an einer unendlichen Position der unendlich verlaufenden virtuellen orthogonalen Linie gerendert; wobei sich der virtuelle dreidimensionale Zielpunkt und der Sichtpunkt-Cursor beide auf der virtuellen orthogonalen Linie befinden, sodass bei Betrachten durch das tragbare XR-Vorrichtungssystem der virtuelle dreidimensionale Zielpunkt und der Sichtpunkt-Cursor an derselben überlappenden Position sind, und der Zielpunkt nicht auf der virtuellen orthogonalen Linie ist, sodass nur der Sichtpunkt-Cursor, jedoch nicht der Zielpunkt oder der virtuelle dreidimensionale Zielpunkt gerendert wird; wobei die virtuelle orthogonale Linie eine virtuelle Linie ist, auf der kein Lichtstrahl von dem Zentrum der smarten XR-Brille zu dem virtuellen dreidimensionalen Zielpunkt vorhanden oder gerendert ist;
Schritt 3: Bewegen des Sichtpunkt-Cursors durch Bewegen des Steuerkörpers, um ein virtuelles Zielobjekt anzuvisieren, wobei der Zielpunkt oder der Steuerkörper bei Bewegen des Sichtpunkt-Cursors nicht visuell durch die smarte XR-Brille beobachtet wird, sondern nur der Sichtpunkt-Cursor beobachtet wird; wobei, wenn die virtuelle orthogonale Linie das virtuelle Zielobjekt nicht schneidet, der Sichtpunkt-Cursor an der unendlichen Position der virtuellen orthogonalen Linie wie in Schritt 2 verbleibt; wenn die virtuelle orthogonale Linie das virtuelle Zielobjekt schneidet, der parallaxenfreie Sichtpunkt-Cursor von der unendlichen Position zu einem Schnittpunkt der virtuellen orthogonalen Linie und einer der smarten XR-Brille zugewandten Oberfläche des virtuellen Zielobjekts zurückgezogen wird und somit an diesem Schnittpunkt gerendert und angezeigt oder gerendert, aber nicht angezeigt wird, um einen berührten oder geschnittenen Zustand mit dem virtuellen Zielobjekt auf eine Weise darzustellen, die das virtuelle Zielobjekt nicht verdeckt.

2. - Verfahren nach Anspruch 1, wobei der Sichtpunkt-Cursor eine Grafik oder ein Symbol ist, die/das einen Auslösepunkt oder den Schnittpunkt der virtuellen orthogonalen Linie und der der smarten XR-Brille zugewandten Oberfläche des virtuellen Zielobjekts angibt.

3. - Verfahren nach Anspruch 1, wobei der Zielpunkt als beliebige Position festgelegt wird, die anhand einer Kombination des einen oder der mehreren Handgelenke und räumlicher Position(en) des einen oder der mehreren vorbestimmten Schlüsselpunkte an dem handgehaltenen Objekt berechnet wird.

4. - Verfahren nach Anspruch 1, auch umfassend Berührungssteuerungsschritte: Voreinstellen eines Kontakts zwischen einer Zeigefingerspitze und einer Daumenspitze als Greifgeste zum Ergreifen des betätigbaren virtuellen Zielobjekts; und Voreinstellen einer Trennung der Daumenspitze von der Zeigefingerspitze als Loslassgeste; wobei, wenn ein Übergang von der Greifgeste zur Loslassgeste erkannt wird, eine Klickbetätigung auf das virtuelle Zielobjekt ausgeführt wird; wenn eine kontinuierliche Greifgeste erkannt wird, eine Zieh- oder Drehbetätigung an dem virtuellen Zielobjekt ausgeführt wird; wenn nach der Zieh- oder Drehbetätigung die Loslassgeste erkannt wird, wir die Zieh- oder Drehbetätigung als abgeschlossen bestimmt wird.

5. - Verfahren nach Anspruch 4, wobei eine Bestimmung, ob die Greifgeste und die Loslassgeste in den Berührungssteuerungsschritten ausgeführt werden, die folgenden Schritte umfasst:
Festlegen einer Auslöseregion mit Breite W an einem zu berührenden Finger; wobei ein linker Auslösebestimmungspunkt WL und ein rechter Auslösebestimmungspunkt WR an Position W/2 links bzw. W/2 rechts eines Mittelpunkts der Auslöseregion entlang einer Richtung parallel zu der X-Achse festgelegt werden, mit anderen Worten, der linke Auslösebestimmungspunkt WL und der rechte Auslösebestimmungspunkt WR sind Punkte, die der linken und der rechten Begrenzung der Auslöseregion entsprechen; N Videoströme mit Parallaxe durch das tragbare XR-Vorrichtungssystem der smarten XR-Brille erfasst werden, wobei N eine ganze Zahl ist und N≥2, Verfolgen und Bestimmen, ob sich eine Auslöserfingerspitze P zwischen dem linken Auslösebestimmungspunkt WL und dem rechten Auslösebestimmungspunkt WR befindet, die der Auslöseregion in allen entsprechenden N Bildern mit demselben Zeitpunkt aus den N Videoströmen entsprechen, und falls ja, Berechnen von Positionsinformationen von drei Zielpunkten, nämlich dem linken Auslösebestimmungspunkt WL, der Auslöserfingerspitze P und dem rechten Auslösebestimmungspunkt WR für jedes der N Bilder mit demselben Zeitpunkt; wobei dann in jedem der N Bilder mit demselben Zeitpunkt X-Achsen-Werte (WRX, PX und WLX) der Positionsinformationen der drei Zielpunkte in diesem Bild verwendet werden, um ein Verhältnis (PX-WRX):(WLX-PX) zu berechnen, das eine Wertdifferenz zwischen PX und WRX zu einer Wertdifferenz zwischen WLX und PX ist; nur wenn alle Verhältnisse, die in allen der N Bilder mit demselben Zeitpunkt berechnet werden, gleich sind, wird bestimmt, dass die Auslöserfingerspitze P die Auslöseregion des zu berührenden Fingers berührt hat, andernfalls wird bestimmt, dass die Auslöserfingerspitze P die Auslöseregion des zu berührenden Fingers nicht berührt.

6. - Verfahren nach Anspruch 5, wobei ein Berechnen der räumlichen Positionen der Handgelenke gemäß der folgenden Schritte erfolgt:
Behandeln einer Verbindungslinie, die durch zwei Mittelpunkte L und R der linken Kamera und der rechten Kamera der smarten XR-Brille verläuft, jeweils als X-Achse; Annehmen, dass in einem Sichtfeld der linken Kamera ein eingeschlossener Winkel, definiert als TΘL, zwischen der X-Achse und einer Verbindungslinie, die den Mittelpunkt L der linken Kamera und ein Zielhandgelenk T verbindet, gebildet ist; auf ähnliche Weise Annehmen, dass in einem Sichtfeld der rechten Kamera ein eingeschlossener Winkel, definiert als TΘR, zwischen der X-Achse und einer Verbindungslinie, die den Mittelpunkt R der rechten Kamera und das Zielhandgelenk T verbindet, gebildet ist;
Annehmen einer Länge einer Parallaxen-Grundlinie zwischen den zwei Mittelpunkten L und R der linken Kamera und der rechten Kamera als d; Berechnen einer Position (X, Z) des Zielhandgelenks T:
wenn sich das Zielhandgelenk T zwischen den zwei Mittelpunkten L und R der linken Kamera und der rechten Kamera befindet: $Z = d / \left[TAN\left(T⊖L\right)-TAN \left(T⊖R-Π/2\right)\right] , X = Z * TAN \left(T⊖L\right)$ (1),
wenn sich das Zielhandgelenk T auf der linken Seite des Mittelpunkts L der linken Kamera befindet:
$Z = d / \left[TAN\left(T⊖R-Π/2\right)-TAN\left(T⊖L-⊖/2\right)\right] , X = - Z * TAN \left(T⊖L\right)$ (2);
wenn sich das Zielhandgelenk T auf der rechten Seite des Mittelpunkts R der rechten Kamera befindet:
$Z = d / \left[COT\left(T⊖L\right)-COT\left(T⊖R\right)\right] , X = Z / Tan \left(T⊖L\right)$ (3);
ein Referenzpunkt zur Bestimmung eines Y-Achsen-Werts ist definiert als ein beliebiger Punkt an einer untersten Seite von Videobildern, die von der linken Kamera und der rechten Kamera wahrgenommen werden; eine Anzahl von Y-Pixeln, die von dem Referenzpunkt bis zum Zielhandgelenk T, das in der linken Kamera und der rechten Kamera erscheint, nach oben gezählt werden, ist der Y-Achsen-Wert des Zielhandgelenks T; und dieser Y-Achsen-Wert des Zielhandgelenks T wird als Y-Achsen-Wert einer vollständigen räumlichen Position (X, Y, Z) des Zielhandgelenks T behandelt.

7. - Verfahren zum Anvisieren virtueller Objekte in einem dreidimensionalen Raum, anwendbar auf Schreib-, Zeichen- oder Formungsanwendungen eines tragbaren XR-Vorrichtungssystems; das Verfahren umfasst die folgenden Schritte:
Schritt 1: Verwenden einer Hand als Steuerkörper; Festlegen einer voreingestellten Position, die anhand eines oder mehrerer Handgelenke der Hand berechnet wird, als Zielpunkt, oder Festlegen einer voreingestellten Position, die anhand einer Kombination des einen oder der mehreren Handgelenke und eines oder mehrerer vorbestimmter Schlüsselpunkte an einem handgehaltenen Objekt berechnet wird, als Zielpunkt;
Schritt 2: wenn der Steuerkörper gleichzeitig in einer linken Kamera und einer rechten Kamera einer smarten XR-Brille erscheint, die das tragbare XR-Vorrichtungssystem ausführt, Berechnen von Koordinaten XL, YL des Zielpunkts, der in der linken Kamera erscheint, und von Koordinaten XR, YR des Zielpunkts, der in der rechten Kamera erscheint, in Bezug auf den Steuerkörper; und dann Berechnen eines virtuellen dreidimensionalen Zielpunkts basierend auf den Koordinaten XL, YL und den Koordinaten XR, YR unter Verwendung von trigonometrischer Berechnung, wobei der virtuelle dreidimensionale Zielpunkt an derselben Position in der linken Kamera und der rechten Kamera der smarten XR-Brille erscheint, sodass der virtuelle dreidimensionale Zielpunkt parallaxenfrei ist; und Rendern eines Schreibwerkzeugs oder Formungswerkzeugs an dem virtuellen dreidimensionalen Zielpunkt; auch Festlegen einer Position, an der das Schreibwerkzeug oder Formungswerkzeug positioniert ist, als Sichtpunkt-Cursor; wobei der Zielpunkt nicht auf der virtuellen orthogonalen Linie ist, sodass nur der Sichtpunkt-Cursor, jedoch nicht der Zielpunkt oder der virtuelle dreidimensionale Zielpunkt gerendert wird; wobei kein Lichtstrahl von dem Zentrum der smarten XR-Brille zu dem virtuellen dreidimensionalen Zielpunkt vorhanden ist;
Schritt 3: Bewegen des Sichtpunkt-Cursors durch Bewegen des Steuerkörpers, um auf einem virtuellen Zeichenbrett/-pad zu zeichnen oder zu schreiben oder direkt in der Luft zu zeichnen oder zu schreiben, wobei der Zielpunkt oder der Steuerkörper bei Bewegen des Sichtpunkt-Cursors nicht visuell von einem Benutzer durch die smarte XR-Brille beobachtet wird, sondern nur der Sichtpunkt-Cursor beobachtet wird; wobei eine Greifgeste der Hand bedeutet, dass das Zeichnen oder Schreiben aktiviert ist, sobald der Steuerkörper bewegt wird, wobei Farbe oder Punkte an derselben parallaxenfreien Position wie ein Ende des Schreibwerkzeugs gerendert werden, um Striche oder Handschrift anzuzeigen; eine Loslassgeste der Hand das Stoppen des Zeichnens oder Schreibens bedeutet; wenn der Sichtpunkt-Cursor das virtuelle Zeichenbrett/-pad berührt, wird das Ende des Schreibwerkzeugs an derselben parallaxenfreien Position wie ein Berührungspunkt des Sichtpunkt-Cursors auf dem virtuellen Zeichenbrett/-pad angezeigt; wenn der Sichtpunkt-Cursor ein Formungswerkzeug ist, ist eine Spitze des Formungswerkzeugs ein bedienbarer Punkt; wobei durch Entfernen unerwünschter Pixelpunkte einzeln auf einer äußeren Schicht eines virtuellen Zielobjekts eine Formungsaktion ausgeführt wird und allmählich eine Skulptur entsteht.

8. - Kopfmontierte Anzeigevorrichtung (700), umfassend mindestens zwei Kameras, die konfiguriert sind, um Videos und/oder Bilder eines Zielbereichs aufzunehmen; wobei die kopfmontierte Anzeigevorrichtung (700) auch einen Speicher (710) und einen Prozessor (720) umfasst; der Speicher (710) ein Computerprogramm speichert, das, wenn es von dem Prozessor (720) ausgeführt wird, das Verfahren zum Anvisieren virtueller Objekte in einem dreidimensionalen Raum nach einem der Ansprüche 1 bis 7 implementiert.

9. - Speichermedium, das computerlesbar ist, wobei ein Computerprogramm in dem Speichermedium gespeichert ist; wobei das Computerprogramm, wenn es von einem Prozessor (720) ausgeführt wird, das Verfahren zum Anvisieren virtueller Objekte in einem dreidimensionalen Raum nach einem der Ansprüche 1 bis 7 implementiert.

## Revendications

1. - Procédé de ciblage d'objets virtuels dans un espace tridimensionnel, applicable à un système de dispositif portable de réalité étendue (XR), comprenant les étapes suivantes :
étape 1 : utiliser une main comme organe de commande ; définir une position prédéfinie calculée à partir d'une ou plusieurs articulations de main de la main comme point de visée, ou définir une position prédéfinie calculée à partir d'une combinaison de la ou des articulations de main et d'un ou plusieurs points clés prédéterminés sur un objet tenu à la main comme point de visée ;
étape 2 : lorsque l'organe de commande apparaît simultanément dans une caméra gauche et une caméra droite d'une paire de lunettes intelligentes XR exécutant ledit système de dispositif portable XR, calculer des coordonnées XL, YL du point de visée apparaissant dans la caméra gauche et des coordonnées XR, YR du point de visée apparaissant dans la caméra droite par rapport à l'organe de commande ; puis calculer un point de visée virtuel tridimensionnel sur la base des coordonnées XL, YL et des coordonnées XR, YR à l'aide de calculs trigonométriques, le point de visée virtuel tridimensionnel ayant une même position apparaissant dans la caméra gauche et la caméra droite de la paire de lunettes intelligentes XR, de telle sorte que le point de visée virtuel tridimensionnel soit sans parallaxe ; former une ligne orthogonale virtuelle s'étendant à l'infini passant orthogonalement à travers un centre de la paire de lunettes intelligentes XR et le point de visée virtuel tridimensionnel, et un curseur de point de vue sans parallaxe est rendu à une position infinie de la ligne orthogonale virtuelle s'étendant à l'infini ; le point de visée virtuel tridimensionnel et le curseur de point de vue sont tous deux situés sur la ligne orthogonale virtuelle, de telle sorte que, en vue à travers le système de dispositif portable XR, le point de visée virtuel tridimensionnel et le curseur de point de vue se trouvent à une même position de chevauchement, et le point de visée ne se trouve pas sur la ligne orthogonale virtuelle, et par conséquent, seul le curseur de point de vue, et pas le point de visée ou le point de visée virtuel tridimensionnel, est rendu ; la ligne orthogonale virtuelle est une ligne virtuelle où aucun rayon lumineux n'est présent ni rendu depuis le centre de la paire de lunettes intelligentes XR jusqu'au point de visée virtuel tridimensionnel ;
étape 3 : déplacer le curseur de point de vue en déplaçant l'organe de commande pour viser un objet cible virtuel, tandis que le point de visée ou l'organe de commande n'est pas observé visuellement à travers la paire de lunettes intelligentes XR lors du déplacement du curseur de point de vue, mais que seul le curseur de point de vue est observé ; si la ligne orthogonale virtuelle ne coupe pas l'objet cible virtuel, le curseur de point de vue reste à la position infinie de la ligne orthogonale virtuelle comme à l'étape 2 ; si la ligne orthogonale virtuelle coupe l'objet cible virtuel, ramener le curseur de point de vue qui est sans parallaxe de la position à l'infini à un point d'intersection de la ligne orthogonale virtuelle et d'une surface de l'objet cible virtuel faisant face à la paire de lunettes intelligentes XR, et ainsi rendu et affiché à ce point d'intersection, ou rendu mais pas affiché pour illustrer un état touché ou d'intersection avec l'objet cible virtuel d'une manière qui ne masque pas l'objet cible virtuel.

2. - Procédé selon la revendication 1, dans lequel le curseur de point de vue est un graphique ou une icône indiquant un point de déclenchement ou le point d'intersection de la ligne orthogonale virtuelle et de la surface de l'objet cible virtuel faisant face à la paire de lunettes intelligentes XR.

3. - Procédé selon la revendication 1, dans lequel le point de visée est défini comme toute position calculée à partir d'une combinaison de la ou des articulations de main et de la/des position(s) spatiale(s) du ou des points clés prédéterminés sur l'objet tenu à la main.

4. - Procédé selon la revendication 1, comprenant en outre des étapes de commande tactile : prédéfinir un contact entre un bout de l'index et un bout du pouce en tant que geste de préhension pour saisir l'objet cible virtuel qui est opérationnel ; et prédéfinir la séparation du bout du pouce du bout de l'index en tant que geste de libération ; lorsqu'une transition du geste de préhension au geste de libération est détectée, une opération de clic sur l'objet cible virtuel est effectuée ; lorsqu'un geste de préhension continu est détecté, une opération de glissement ou de rotation est effectuée sur l'objet cible virtuel ; lorsque le geste de libération est détecté après l'exécution de l'opération de glissement ou de rotation, l'opération de glissement ou de rotation est considérée comme terminée.

5. - Procédé selon la revendication 4, dans lequel une détermination du point de savoir si le geste de préhension et le geste de libération sont effectués au cours des étapes de commande tactile comprend les étapes suivantes :
définir une région de déclenchement de largeur W sur un doigt à toucher ; un point de détermination de déclenchement gauche WL et un point de détermination de déclenchement droit WR sont définis respectivement à des positions situées à W/2 sur la gauche et à W/2 sur la droite d'un point central de la région de déclenchement le long d'une direction parallèle à un axe X, en d'autres termes, le point de détermination de déclenchement gauche WL et le point de détermination de déclenchement droit WR sont respectivement des points correspondant aux limites gauche et droite de la région de déclenchement ; un nombre N de flux vidéo avec parallaxe sont acquis par le système de dispositif portable XR de la paire de lunettes intelligentes XR, N étant un nombre entier, et N ≥ 2, suivre et déterminer si un bout de doigt de déclenchement P est situé entre le point de détermination de déclenchement gauche WL et le point de détermination de déclenchement droit WR correspondant à la région de déclenchement dans chacune du nombre N d'images correspondantes portant le même temps issues respectivement dudit nombre N de flux vidéo, et si tel est le cas, calculer des informations de position de trois points cibles qui sont le point de détermination de déclenchement gauche WL, le bout du doigt de déclenchement P et le point de détermination de déclenchement droit WR pour chacune dudit nombre N d'images portant le même temps ; ensuite dans chacune dudit nombre N d'images portant le même temps, des valeurs sur l'axe X (WRX, PX et WLX) des informations de position des trois points cibles dans cette image sont utilisées pour calculer un rapport (PX-WRX):(WLX-PX), qui correspond à une différence de valeur entre PX et WRX par rapport à une différence de valeur entre WLX et PX ; uniquement lorsque tous les rapports calculés dans l'ensemble dudit nombre N d'images portant le même temps sont identiques, il est déterminé que le bout du doigt de déclenchement P a touché la région de déclenchement du doigt à toucher, autrement, il est déterminé que le bout du doigt de déclenchement P ne touche pas la région de déclenchement du doigt à toucher.

6. - Procédé selon la revendication 5, dans lequel le calcul des positions spatiales des articulations de main s'effectue selon les étapes suivantes :
considérer une ligne de jonction passant respectivement par les deux points centraux L et R de la caméra gauche et de la caméra droite de la paire de lunettes intelligentes XR comme l'axe X ; supposer que dans le champ de vision de la caméra gauche, un angle inclus défini par TθL est formé entre l'axe X et une ligne de jonction reliant le point central L de la caméra gauche et une articulation de main cible T ; de même, supposer que dans le champ de vision de la caméra droite, un angle inclus défini par TθR est formé entre l'axe X et une ligne de jonction reliant le point central R de la caméra droite et l'articulation de main cible T ;
supposer qu'une longueur d'une ligne de base de parallaxe entre les deux points centraux L et R de la caméra gauche et de la caméra droite est d ; calculer une position (X, Z) de l'articulation de main cible T :
si l'articulation de main cible T est située entre les deux points centraux L et R de la caméra gauche et de la caméra droite : $Z = d / \left[TAN\left(T⊖L\right)-TAN \left(T⊖R-Π/2\right)\right] , X = Z * TAN \left(T⊖L\right)$ (1);
si l'articulation de main cible T est située sur un côté gauche du point central L de la caméra gauche : $Z = d / \left[TAN\left(T⊖R-Π/2\right)-TAN\left(T⊖L-⊖/2\right)\right] , X = - Z * TAN \left(T⊖L\right)$ (2);
si l'articulation de main cible T est située sur un côté droit du point central R de la caméra droite : $Z = d / \left[COT\left(T⊖L\right)-COT\left(T⊖R\right)\right] , X = Z / Tan \left(T⊖L\right)$ (3);
un point de référence pour une détermination d'une valeur d'axe Y est défini comme tout point situé sur un côté le plus bas des images vidéo perçues par la caméra gauche et la caméra droite ; un nombre Y de pixels comptés vers le haut à partir du point de référence jusqu'à l'articulation de main cible T apparaissant dans la caméra gauche et la caméra droite correspond à la valeur d'axe Y de l'articulation de main cible T ; et cette valeur d'axe Y de l'articulation de la main cible T est considérée comme une valeur d'axe Y d'une position spatiale complète (X, Y, Z) de l'articulation de main cible T.

7. - Procédé de ciblage d'objets virtuels dans un espace tridimensionnel, applicable à des applications d'écriture, de dessin ou de sculpture d'un système de dispositif portable XR ; le procédé comprend les étapes suivantes :
étape 1 : utiliser une main comme organe de commande ; définir une position prédéfinie calculée à partir d'une ou plusieurs articulations de main de la main comme un point de visée, ou définir une position prédéfinie, calculée à partir d'une combinaison de la ou des articulations de main et d'un ou plusieurs points clés sur un objet tenu à la main comme point de visée ;
étape 2 : lorsque l'organe de commande apparaît simultanément dans une caméra gauche et une caméra droite d'une paire de lunettes intelligentes XR exécutant ledit système de dispositif portable XR, calculer des coordonnées XL, YL du point de visée apparaissant dans la caméra gauche et des coordonnées XR, YR du point de visée apparaissant dans la caméra droite par rapport à l'organe de commande ; puis calculer un point de visée virtuel tridimensionnel sur la base des coordonnées XL, YL et des coordonnées XR, YR à l'aide d'un calcul trigonométrique, le point de visée virtuel tridimensionnel ayant une même position apparaissant dans la caméra gauche et la caméra droite de la paire de lunettes intelligentes XR, de telle sorte que le point de visée virtuel tridimensionnel soit sans parallaxe ; et rendre un outil d'écriture ou un outil de sculpture au niveau du point de visée virtuel tridimensionnel ; définir également une position où l'outil d'écriture ou l'outil de sculpture est positionné comme curseur de point de vue ; le point de visée ne se trouve pas sur la ligne orthogonale virtuelle par conséquent seul le curseur de point de vue est rendu, mais pas le point de visée ni le point de visée virtuel tridimensionnel ; aucun rayon lumineux n'est présent entre le centre de la paire de lunettes intelligentes XR et le point de visée virtuel tridimensionnel ;
étape 3 : déplacer le curseur de point de vue en déplaçant l'organe de commande pour dessiner ou écrire sur une tablette/un bloc de dessin virtuel, ou pour dessiner ou écrire directement dans l'air, tandis que le point de visée ou l'organe de commande n'est pas observé visuellement par un utilisateur à travers la paire de lunettes intelligentes XR lors du déplacement du curseur de point de vue, mais que seul le curseur de point de vue est observé ; un geste de préhension de la main signifiant que le dessin ou l'écriture est activé dès que l'organe de commande est déplacé où de la peinture ou des points sont rendus à une même position sans parallaxe qu'une extrémité de l'outil d'écriture afin d'afficher des traits ou une écriture manuscrite ; un geste de libération de la main représente l'arrêt du dessin ou de l'écriture ; lorsque le curseur de point de vue entre en contact avec la tablette/le bloc de dessin virtuel, l'extrémité de l'outil d'écriture est affichée à une même position sans parallaxe qu'un point de contact du curseur de point de vue sur la tablette/le bloc de dessin virtuel ; lorsque le curseur de point de vue est un outil de sculpture, une extrémité de l'outil de sculpture constitue un point opérationnel ; en supprimant des points de pixels indésirables un par un sur une couche externe d'un objet cible virtuel, une action de sculpture est effectuée et il en résulte progressivement une sculpture.

8. - Dispositif d'affichage monté sur la tête (700), comprenant au moins deux caméras configurées pour capturer des vidéos et/ou des images d'une zone cible ; le dispositif d'affichage monté sur la tête (700) comprend également une mémoire (710) et un processeur (720) ; la mémoire (710) stocke un programme informatique qui, lorsqu'il est exécuté par le processeur (720), met en œuvre le procédé de ciblage d'objets virtuels dans un espace tridimensionnel selon l'une quelconque des revendications 1-7.

9. - Support de stockage qui est lisible par ordinateur, dans lequel un programme informatique est stocké dans le support de stockage ; le programme informatique, lorsqu'il est exécuté par un processeur (720), met en œuvre le procédé de ciblage d'objets virtuels dans un espace tridimensionnel selon l'une quelconque des revendications 1-7.
